# EUROPEAN PATENT APPLICATION

(11) **EP 2 851 513 A1**
(43) Date of publication of application: **25.03.2015**
(21) Application number: 13185378.0
(22) Date of filing: 20.09.2013
(51) Int. Cl.: F01D 5/28, C04B 37/00, C23C 28/00, F23R 3/00

(54) **Heat exposed component**

(71) Applicant: ALSTOM Technology Ltd, 5400 Baden (CH)
(72) Inventor: Renusch, Daniel, 5400 Baden (CH); Stuer, Michael, 5443 Niederrohrdorf (CH); Bossmann, Hans-Peter, 79787 Lauchringen (DE); Esquerre, Mathieu, 5432 Neuenhof (CH)

(57) **Abstract**

The invention refers to a heat exposed component (5) having a base body with a metallic surface onto which a layer of thermal barrier coating (TBC) (3) is applied on directly or indirectly providing a continuous surface of ceramic material (1).

The invention is characterized in that said at least one plate-like heat resistant component (1) made of ceramic material is joined onto said continuous surface of ceramic material to obtain a heat resistant cover onto the TBC (3) for reducing temperature stress of TBC (3) during heat exposure of the heat exposed component (5).

## Description

### Technical Field

The invention relates to a heat exposed component, preferably to components of a combustor, like a combustor liner, or a turbine, like vanes, blades or heat shielding elements, of a gas turbine arrangement, having a base body with a metallic surface onto which a layer of thermal barrier coating (TBC) is applied on directly or indirectly providing a continuous surface of ceramic material.

Thermal stability of materials from which components are manufactured for the use in gas turbine arrangements may not be high enough to withstand process temperatures in the range above 1400°C. Therefore in modern and future gas turbine arrangements great efforts must be made to protect the heat exposed components against high temperature stress. Firstly, the heat-exposed components can be cooled by means of active cooling techniques, for example by providing cooling channels inside the heat-exposed components through which cooling air is directed under pressure. Secondly, the components are covered with a heat protective layer at least in those areas which are exposed to a particularly high heat load.

Conventional heat protective layers are so called thermal barrier coatings (TBC) which are highly advanced material systems for formally insulating components from large and prolonged heat loads. TBC typically consists of four layers: the metal substrate, metallic bond coat, thermally grown oxide and ceramic top coat. The ceramic top coat is typically composed of Ytria-stabilized Zirconia (YSZ).

### Background of the Invention

The current thermal barrier coatings (TBCs) may reach their application limits in high advanced gas turbines due to their limited capacities to control their micro-structure from the process parameters and the reduced choice of materials suitable for thermal plasma spraying. One way to overcome these limitations is to move away from the TBC coatings and replace them with so called ceramic tiles which can be fixed on the surface of the heat exposed component with different fastening technologies.

In the document US 4,563,128 ceramic tiles are clamped in dovetail type recesses in the flank area of a turbine blade.

The document EP 0 895 028 B1 discloses a ceramic lining for combustions spaces comprising at least one wall panel, made of a heat resistant structural ceramic. Said wall panel provides an opening through which a fastening element being arranged for fastening said wall panel to the inner wall of the combustor.

The document US 7,198,860 B2 discloses a ceramic tile insulation for gas turbine components with a multitude of ceramic tiles which are bonded to a heat exposed surface of a gas turbine component. A first layer of individual ceramic tiles are bonded to the surface of the gas turbine component which is of ceramic material. A second layer of individual tiles is bonded on top of the first layer.

### Summary of the Invention

It is an object of the invention to provide enhanced thermal protection of the surface of a heat exposed component. Especially it is an object to guarantee a reasonable residual life after a ceramic tile failure would happen, i.e. in case of detaching one or more ceramic tiles from the surface of a heat exposed component the important heat shield would suffer significantly so that the heat exposed component will be thermally stressed in the area of the removed ceramic tiles. Further it is of high interest to avoid mechanical strength requirements due to fixing heat shielding ceramic tiles onto the surface of the heat exposed component.

The object is achieved by the sum total of the features in the independent claim 1.

The invention can be modified advantageously by the features disclosed in the sub claims as well in the following description especially referring to preferred embodiments.

The inventive idea uses the TBC layer applied on the metallic surface of the heat exposed component and suggests to join at least one plate-like heat resistant component made of ceramic material onto said TBC-layer which provides a continuous surface of ceramic material, to obtain a heat resistant cover onto the TBC to reduce the temperature stress of TBC during heat exposure of the heat exposed component. So the TBC works as an interlayer between the metals surface of the heat exposed component and the at least one plate-like heat resistant component.

The inventive idea started with the main challenge to find a way of directly joining a ceramic plate-like heat resistant component on the metal surface of a heat exposed component without the use of a felt material which could be incompatible of certain applications. A direct joining in way of brazing of highly porous ceramic plate-like heat resistant component onto metallic substrates could only be achieved in a very limited porosity range of the ceramic material which is characterized by the range between 10 % and 25 vol. % by using very high brazing temperature over 850°C melting point. Successful joining in way of brazing of ceramic materials with other porosity ranges onto metal substrates requires a different brazing strategy. Inventively it is proposed to use a TBC interlayer which has two functions: Firstly to reduce the thermal mismatch stress to be taken by the ceramic and thereby allow brazing of ceramics with a broader porosity range from 1 to 90 vol.%, and secondly to add a residual life-time to the heat exposed component after loss of the ceramic plate-like heat resistant component.

In a preferred embodiment the TBC inter layer has a porosity level between 5% and 30% by volume. The reduced thermal mismatch stress between the TBC interlayer and the ceramic plate-like heat resistant component allows the joining of a ceramic plate-like heat resistant component with a broader porosity ranging from 1 to 90 % by volume.

The joining between the ceramic plate-like heat resistant component on the continuous surface of the TBC interlayer can be performed by brazing using a reactive air braze or an active braze alloy. Also it is possible that the plate-like heat resistant component is joined on said TBC interlayer by a diffusion braze whereby at least one of the surface of the ceramic material of said TBC interlayer or the plate-like heat resistant component is metallized first.

A third alternative for joining the plate-like heat resistant component onto the continuous surface of the TBC interlayer can be realized by a cement type adhesive braze material.

Depending on the specific choice of joint material, i.e. reactive air braze, active braze alloy or cement type adhesive braze material, the porosity level of the ceramic material of the plate-like heat resistant component can be chosen lower or higher than the porosity level of the TBC-layer.

In all cases of choosing suitable ceramic materials for the plate-like heat resistant components, the TBC interlayer as well the joint, a multitude of plate-like heat resistant component, preferably in rectangular shape, can be assembled side by side onto the continuous surface of the TBC-layer to obtain a continuous heat resisting cover layer acting as a thermal protection for the heat exposed component. To avoid any disadvantage effects concerning the aero-dynamical abilities of the heat exposed components which preferably are blades and vanes of a turbine, the surface of each plate-like heat resistant component which is apposed to the TBC interlayer has an aero-dynamical shape which can be manufactured after producing the plate-like heat resistant component in way of a sintering process.

### Brief Description of the Figures

The invention shall subsequently be explained in more detail based on exemplary embodiments in conjunction with the drawing. In the drawing
- Fig. 1: shows a multilayer design of a plate-like heat resistant component on a TBC interlayer joint on a metal substrate,
- Fig. 2a,b,c: cross section of a turbine blade with additional detailed cross section views and
- Fig. 3: air foil of a turbine blade having a heat shielded leading and trailing edge.

### Detailed Description of exemplary Embodiments

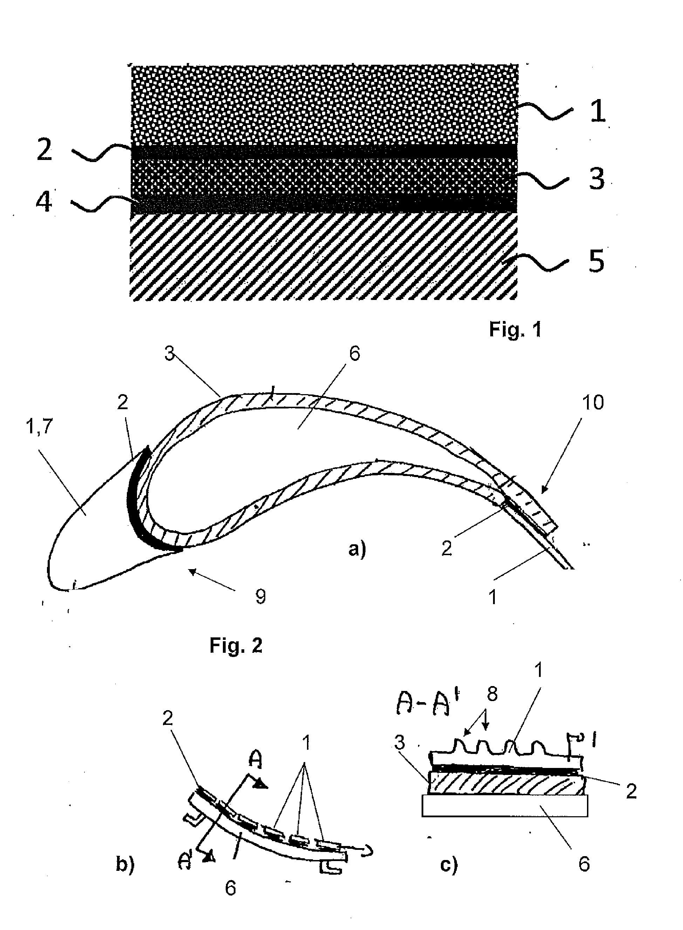

Fig. 1 shows a sequence of several layers corresponding to the inventive heat shield cover on the surface of a heat exposed component 5 made of metal material like Hastelloy X, which is for example a combustion liner of a combustor or a blade or vane or heat shield element in a turbine of a gas or steam turbine arrangement. On top of the metallic surface of the heat exposed component 5 a TBC coating 3 is bonded. In a preferred embodiment as shown in figure 1 between the TBC-layer 3 and the surface of the heat exposed component 5 a corrosion protection layer of a MCrAIY type material is applied typical by CVD or plasma spraying.

The TBC-layer 3 consists partially or fully of stabilized Zircon with a porosity between 10% and 30% by volume. Onto the surface of the TBC-layer 3 a metallic braze layer 2 is applied which can be optionally loaded with fibrous or particulate additives to reduce the thermal expansion mismatch stresses, strains at the interface between the TBC-layer 3 and a plate-like heat resistant component 1 made of ceramic material which is applied onto the metallic braze layer 3. The ceramic plate-like heat resistant component 1 has porosities between 10% and 80% by volume which typical consists of a mixture of aluminum oxide and zirconium oxide. As a matter of course other ceramic materials are possible for the use as plate-like heat resistant component.

Figure 2a illustrates a cross section of an airfoil 6 of a turbine blade or vane which is covered completely with a TBC-layer 3. Additionally a heat resistant component 1 made of ceramic material 7 is attached in the area of the leading edge 9 of the airfoil 6 of the turbine blade. Between the ceramic heat resistant component 1 and the TBC-layer 3 of the airfoil 6 a joint layer 2 which preferably is a metallic braze layer, a reactive air braze or an active braze alloy is applied.

Additional in the region of the trailing edge 10 a further plate-like heat resistant component 1 is attached onto the TBC-layer 3 by an inter braze layer 2.

The airfoil 6 shown in figure 2a illustrates the inventive idea to join at least one additional ceramic heat resistant component 1 onto the TBC-layer 3 using a joint layer 2 especially at those areas which experience a particularly high heat load.

Further in figures 2b, c it is shown that a multitude of heat resistant components 1 in form of plate-like tiles are joined onto the TBC-layer 3 side by side forming a heat resistant cover over the airfoil 6. In figure 2c it is shown that the surface of each plate-like heat resistant component 1 which is opposed to the airfoil 6, i.e. the heat exposed component, provides a profile 8 with a specific aero-dynamical function.

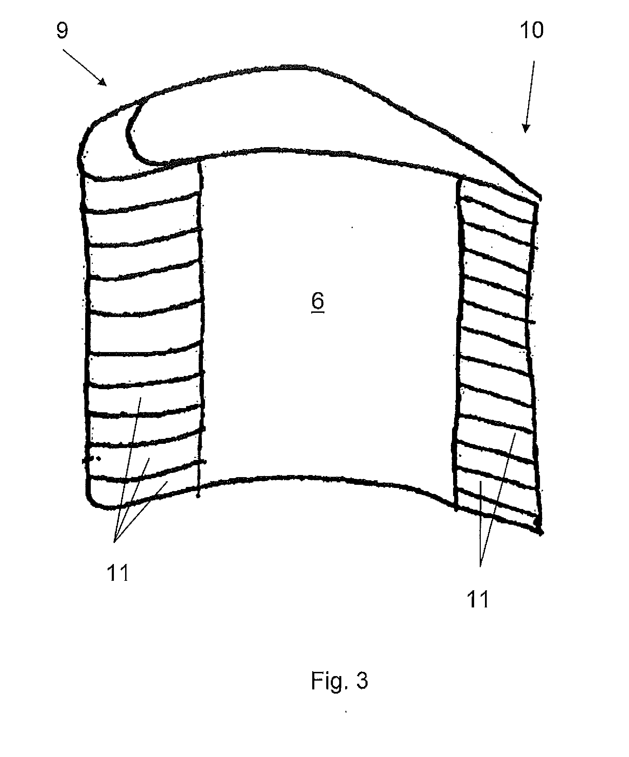

Figure 3 shows a perspective view of an airfoil 6 of a blade or vane which leading 9 and trailing edge 10 provides a multitude of segmented heat resistant components 11 which are arranged side by side along the surface of the airfoil 6.

### List of References Numerous

- 1: Heat resistant component
- 2: Joint, braze layer
- 3: TBC-layer
- 4: Corrosion protection layer
- 5: Heat exposed component
- 6: Airfoil
- 7: ceramic material
- 8: Aero-dynamical profile
- 9: Leading edge
- 10: Trailing edge
- 11: Segmented heat resistant components

## Claims

1. A heat exposed component (5) having a base body with a metallic surface onto which a layer of thermal barrier coating (TBC) (3) is applied on directly or indirectly providing a continuous surface of ceramic material, **characterized in that** at least one plate-like heat resistant component (1) made of ceramic material is joined onto said continuous surface of ceramic material to obtain a heat resistant cover onto the TBC (3) for reducing temperature stress of TBC during heat exposure of the heat exposed component (1).

2. Component according to claim 1, **characterized in that** each of the at least one plate-like heat resistant component (1) provides a porosity between 10 % and 80 % by volume.

3. Component according to claims 1 or 2, **characterized in that** the TBC (3) provides a porosity between 5 % and 30 % by volume.

4. Component according to one of the claims 1 to 3, **characterized in that** the plate-like heat resistant component (1) is joined on said TBC (3) by braze (2), which is a reactive air braze or active braze alloy.

5. Component according to one of the claims 1 to 3, **characterized in that** the plate-like heat resistant component (1) is joined on said TBC (3) by a diffusion braze and at least of the surface of the ceramic material of said TBC or the plate-like heat resistant component is metallized.

6. Component according to one of the claims 1 to 3, **characterized in that** the plate-like heat resistant component (1) is joined on said TBC (3) by a cement type adhesive.

7. Component according to claim 4 to 6, **characterized in that** the joint (2) is loaded with fibrous and/or additives for adapting thermal expansion behavior between TBC (3) and the ceramic material of the plate-like heat resistant component (1).

8. Component according to one of the claims 1 to 7, **characterized in that** the porosity level of the ceramic material of the plate-like heat resistant component (1) is lower than the porosity level of the TBC.

9. Component according to one of the claims 1 to 7, **characterized in that** the porosity level of the ceramic material of the plate-like heat resistant components (1) is higher than the porosity level of the TBC (3).

10. Component according to one of the claims 1 to 9, **characterized in that** the plate-like heat resistant component (1) provides a surface opposed to the TBC (3) having a shape of aerodynamic function.

11. Component according to one of the claims 1 to 10, **characterized in that** a multitude of single plate-like heat resistant components (1) is joined on the surface of the TBC (3) such the plate-like heat resistant components (1) are arranged side by side covering at least a part of the surface of the TBC.

12. Component according to one of the claims 1 to 11, **characterized in that** the heat exposed component (5) is a part of a combustor, like a combustor liner, or a turbine, like a blade, vane or heat shield element, of a gas turbine arrangement.
